# EUROPEAN PATENT SPECIFICATION

(11) **EP 0 564 756 B1**
(45) Date of publication and mention of the grant of the patent: **10.06.1998**
(21) Application number: 92850304.4
(22) Date of filing: 21.12.1992
(51) Int. Cl.: H04M 1/66, H04M 3/38

(54) **Method and arrangement for automatic telephone call answering control**
Verfahren und Einrichtung zur automatischen Kontrolle zur Beantwortung von Telefonanrufen
Méthode et dispositif pour le contrôle automatique de la réponse à un appel téléphonique

(30) Priority: 15.01.1992 SE 9200094
(43) Date of publication of application: 13.10.1993
(73) Proprietor: TELIA AB, 123 86 Farsta (SE)
(72) Inventor: Axelsson, Bernt, 171 42 Solna (SE)
(74) Representative: Akerman, Marten Lennart

(56) References cited:
- EP-A- 0 330 856
- WO-A-91/12685
- US-A- 4 277 649
- US-A- 5 029 196
- US-A- 5 062 133
- PATENT ABSTRACTS OF JAPAN vol. 9, no. 310 (E-364)(2033) 6 December 1985 & JP-A-60 146 563 ( NIPPON DENWA KOSHA )

## Description

### TECHNICAL FIELD

In communication systems for, for example, telephony, mobile telephony and so forth, there is a need, in certain circumstances, to automatically direct the incoming traffic after identification of the caller.

### BACKGROUND OF THE INVENTION

In telephony engineering, it is known for a caller to direct himself to a certain extension within, for example, a private branch exchange. To achieve this, it is required that the caller knows the telephone number which is to be taken. The telephone number consists, for example, of a basic number plus an extension number. If this information is lacking, the caller must connect himself via an operator or office.

Providers of data bases and data equipment allow the user to connect himself to the system after identification by, for example, a password. Unauthorised access, however, can be obtained by mistake or by systematic searching for the password. The latter applies to so-called hackers, who attempt to enter a data system for various reasons. Problems with un-authorised access occur in all data systems which are connected to open communication networks, for example the telephone network. To avoid this problem, automatic call back has been introduced. However, unauthorised access occurs even in this system.

Institutions such as insurance firms and weather bureaus have need to automatically direct incoming traffic to extensions which deal with certain geographic areas.

Rescue services have need to identify the location from which help is requested in order to be able to direct rescue missions quickly and correctly and to the right place.

In U.S. patent 317,890, a method is given for selecting calls at the receiving party by the telephone number of the calling party being indicated on a display. The called party can then choose whether the call should be answered or not. However, one disadvantage is that ringing tones emanate. For those who are exposed to, for example, nuisance calls, it is, however, not acceptable that the telephone rings, even if one does not answer.

U.S patent 4,471,024 specifies an arrangement for transferring a call signal to a telephone set at the receiving party which only comes from a predetermined caller.

U.S. patent 5 029 196 relates to an automated call screening method. During an incoming call, a call processor matches an associated call identification number with a preprogrammed number in order to route the call according to the programmed destination.

U.S. patent 4 277 649, which is considered the closest prior art, relates to a system for screening telephone calls. A called customer can screen calls incoming to his station based on the identity of the calling line. the calling line's identity is forwarded to the called customer's screening memory, which is interrogated to ascertain the call disposition based on information priorly put in the memory by the called customer.

### OBJECT OF THE INVENTION

The present invention relates to a method for routing the incoming traffic in a communication system to predetermined extensions, to prioritize important customers, and to prevent unauthorized callers from connecting themselves to the answering system functions without being authorized.

### SUMMARY OF THE INVENTION

The present invention provides a method and arrangement for routing calls in a communication system in accordance with claims 1 and 7, respectively.

### DESCRIPTION OF THE FIGURES

Figure 1 shows a communications network with caller A, individual connecting elements I, interconnecting means M, indentification equipment K and called party B.

Figure 2 shows indentification equipment K, selector V, answering equipment S and refusal to answer C.

Figure 3 shows indentification equipment K, selector V and a number of answering functions at telephones T, computer equipment D,telefax equipment F and other equipments 0.

Figure 4 shows identification equipment K, access protection P, control element V1, extensions D and answering refusal C.

Figure 5 shows identification equipment K, selector V, and a number of extensions S and operator station T.

### PREFERRED EMBODIMENT

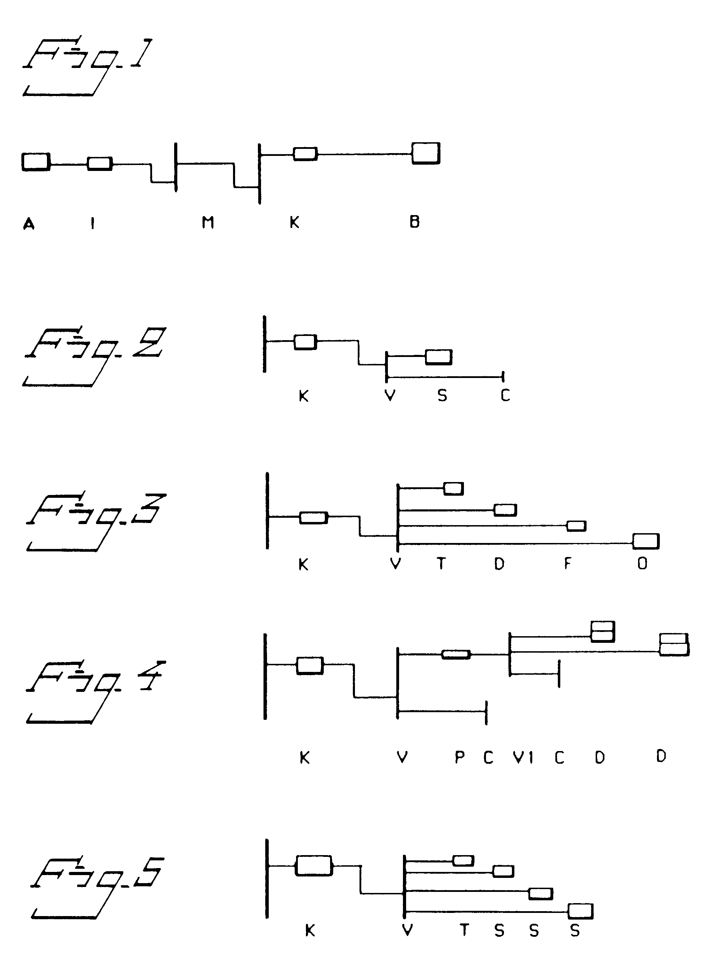

The communication system comprises a calling party A and a receiving party B and means M for interconnecting the parties. A and B are connected to the system via individual connecting necting elements I (in Figure 1 only the individual element of the calling party is shown). Both A and B have unique identity codes. When a call occurs, the calling party A is identified by the system before calling codes are received by the called party B, or a connection to the called party B takes place. The caller A receives a signal that the system is ready to receive the identity code for the required receiver. Signals are transferred in the system preparing the interconnection of A and B. Information on whether the called party B is free or engaged is transferred in the signal system to the caller A. If the called party is free, information about the identity code of the caller A is transferred to the called party B before the call signal is sent out to the called party B. The identity code contains information about the geographic origin of the caller A. The called party B identifies the identity code of the caller, in its identification equipment K, which is compared with a register provided at B. The register contains necessary information about which callers A shall be accepted, denied connection or receive special handling.

A called party B which only wishes to answer calls from certain callers designated in advance, or alternatively wishes to refuse certain designated calls, identifies the caller in its identification equipment K. The identification equipment thereafter controls a selector mechanism V, Figure 2, which, depending on whether the call should be answered, connects the caller to the extension S, from where the call signals from the system emanate, after which the call is answered. If the call is not to be answered, no connection to the answering equipment occurs, which has symbolically been indicated by C in Figure 2.

Providers of data bases, data services and so forth wish that only callers approved in advance should have access to the services. The caller A is identified by the called party B in its identification equipment K. If the caller is not listed in B's register of authorized callers, connection is refused at C in Figure 4. If the caller A is approved, he is connected to the system which answers the call in means arranged for access protection P. The access protection requires that the caller A transmits an access code before the control element V1 connects the caller to the extension D for which A is authorized. In those cases where an incorrect access code is given, or an access code is given for connection to services/equipment for which the caller is not authorized, connection of the caller A is refused by connection to C. In systems with sensitive information callers who attempt to connect themselves without being authorized, or authorized persons who attempt to connect themselves to functions for which they are not authorized, are registered. This information about unauthorized persons can be later utilized for tracing and possibly proceeding against those who seek connection to the system without being authorized. Alternatively, a caller who has not been recognized is connected to a special answering function which ascertains who the caller is and decides what measures shall be taken.

In certain lines of business there is a need to route incoming calls to different extensions (Figure 5) in dependence on the geographic origin of the caller A. Incoming calls are identified and categorized by the identification equipment K. With the aid of the identity code of the caller A, his geographic origin can be determined. At the called party B there are means V for directing traffic to extensions which will serve the respective geographic areas. Requirements of this type are found, for example, in the insurance branch, weather forecasting, rescue services and so forth. Callers who wish information about, for example, the weather outlook request connection in the communication system. The signal paths from the caller A via the interconnecting elements are transferred to the receiving party B. Information about the identity code of the caller A is transferred to the called party B who receives the information and compares the part of the identification code which contains information about the geographic origin with its own register of geographic origins. After the call signal has been received, the internal switching system of the called party B interconnects the called party with the extension intended to serve the designated geographic area. The information is then sent out to the caller A.

A caller A requests connection to a called party B by sending out an identification code. The identification code of the caller A is transferred via the interconnection equipment to the called party B. The equipment of the called party B identifies the caller by comparison of the identification code A with a register arranged at B. If the identification code of the caller is listed in B's register, the caller is given priority before other callers. This is done by the caller A first being put in a possible queue and a special attention signal being sent out to the entity or entities which will take care of the call in the internal communication system of the answering party B. If an interconnection is just about to take place between other callers without priority or lower priority, this interconnection will not take place, but instead the prioritized caller is connected first.

The present invention can be utilized in any communication system whatsoever intended for information transmission where the information about the identification code of the caller is transferred to the called party. Telephony systems, mobile radio systems, data transmission systems can be named as examples.

Figure 3 shows how a call from a caller is received and identified by the called party B in his identification equipment. The caller has arranged registers of different call numbers specifying which type of communication will be utilized. Different functions can be, for example, telephony T, various data services D, various tele services such as, for example, telefax transmission and other services O which are not specified in greater detail here.

In other cases, there is a need for giving certain callers special treatment. This can apply, for example, to certain important customers of an undertaking or to communication between different rescue centres which should be prioritized in disaster situations. In this case, the identification equipment K identifies the call and establishes that the call has priority. The called answering equipment receives a control signal from the identification equipment K about the prioritized call, which is connected to a free extension before other callers. It is also possible to arrange special extensions with the task of only answering prioritized calls. In rescue services the system is utilized for identifying a caller A and for determining the geographic place of resicence, which information has been stored in the data register on callers of the answering function. For example, ordinary subscribers can be divided up in accordance with geographic location, and the identification code of the caller can be specified to the receivers. For specially arranged alarm telephones along roads, for example, the exact address is specified directly. This facilitates direction of the required resources towards the place where help is required. In this way, it is easier for alarm centres, for example, to identify and send help in those cases where the caller is confused, in shock or loses consciousness during the call.

The invention is only limited by the claims below.

## Claims

1. Method in a communication system, comprising calling parties (A), connected to a first unit, and receiving parties (B), connected to a second unit, the receiving party (B) being a data service provider having at least one answering station, and switching means between said first and second units, which switching means are utilized for interconnecting a calling party (A) and a receiving party (B) for communication exchange between them, in which system both the calling party (A) and receiving party (B) have been allocated unique identity codes, the identity code of the calling party (A) being registered in the first unit, on establishment of communication with the receiving party (B), and the identity code being transferred via the switching means to the receiving party (B), which registers the identity code of the calling party (A) before the communication system transfers the call signal to the receiving party (B), wherein the receiving party (B) registers the identity code of the calling party (A), which is compared with a register, provided at the receiving party (B), of approved identity codes for calling parties (A), whereupon, in the case where the calling party (A) is listed in the register, the calling party is interconnected with the receiving party (B),and, in the case where the calling party (A) is not listed in the register, the calling party is refused connection or switched to a specially arranged answering station, **characterized** in that the receiving party (B) is provided with an access protection requiring that the calling party (A) transmits an access code before connecting the calling party (A) to an extension, and in that, in those cases where an incorrect access code is given, or an access code is given for connection to services/equipment for which the calling party (A) is not authorized, further connection of the calling party (A) is refused, and the identity of the calling party (A) is registered.

2. Method according to claim 1, **characterized** in that the identity codes contain information on geographic origin.

3. Method according to any one of the preceding claims, **characterized** in that the setting up of data traffic between the calling party (A) and receiving party (B) is only established if the calling party (A) is registered in the register of the receiving party (B).

4. Method according to any one of the preceding claims, **characterized** in that the calling party (A) is routed to an answering station selected in advance as a function of the identity code of the calling party (A).

5. Method according to any one of claims 1 to 3, **characterized** in that the calling party (A) is interconnected with an answering station at the receiving party (B) in dependence of the geographic origin of the calling party (A).

6. Method according to any one of the preceding claims, **characterized** in that the calling parties (A) are categorized, whereby a calling party allocated the higher priority receives precedence before a calling party with lower priority.

7. Arrangement in a communication system comprising calling equipments (A), connected to first units, and receiving equipments (B) connected to second units, the receiving equipments (B) belonging to a data service provider having at least one answering equipment, and switching means between the first and second units, which switching means are utilized for interconnecting a calling equipment (A) and a receiving equipment (B) for communication transmission between them, and both the calling equipment (A) and receiving equipment (B) have been allocated unique identity codes and the identity code of the calling equipment (A) is registered in the first unit, on establishment of communication with the receiving party (B), and the identity code is transferred via the switching means to the receiving equipment (B) which is adapted to register the identity code of the calling equipment (A) before the communication equipment transfers the call signal to the receiving equipment (B), wherein the receiving equipment (B) is adapted to register the identity code of the calling equipment (A), which is compared with a register arranged in the receiving equipment (B) of approved identity codes for calling equipments (A), whereby the calling equipment (A) which is listed in the register is interconnected with the receiving equipment (B) for communication transmission, and the calling equipment (A) which is not listed in the register of the receiving equipment (B) is refused connection or interconnected to a specially arranged answering station, **characterized** in that the receiving party (B) is provided with an access protection means for receiving an access code from the calling party (A) before connecting the calling party (A) to an extension, and for, in those cases where an incorrect access code is given, or an access code is given for connection to services/equipment for which the calling party (A) is not authorized, refusing further connection of the calling party (A), and registering the identity of the calling party (A).

8. Arrangement according to claim 7, **characterized** in that the identity codes contain information on geographic origin.

9. Arrangement according to any one of claims 7 or 8, **characterized** in that the arrangement is adapted so that the setting up of data traffic between a calling equipment (A) and receiving equipment (B) is only established if the calling equipment (A) is registered in the register of the receiving equipment (B).

10. Arrangement according to any one of claims 7 to 8, **characterized** in that the calling equipment (A) is adapted to be routed towards an answering station selected in advance as a function of the identity code of the calling equipment (A).

11. Arrangement according to any one of claims 7 to 9, **characterized** in that the calling equipment (A) is interconnected to an answering station at the receiving equipment (B) in dependence of the geographic origin of the calling equipment (A).

12. Arrangement according to any one of claims 7 to 11, **characterized** in that the calling equipments (A) are categorized, whereby a calling equipment which is allocated the higher priority is adapted to receive precedence before a calling equipment (A) with lower priority.

## Patentansprüche

1. Verfahren in einem Datenübertragungssystem, das anrufende Parteien (A), die mit einer ersten Einheit verbunden sind, und empfangende Parteien (B), die mit einer zweiten Einheit verbunden sind, wobei die empfangende Partei (B) ein Datendienstanbieter ist, der wenigstens eine antwortende Station aufweist, und Schaltmittel zwischen den ersten und zweiten Einheiten aufweist, welche Schaltmittel zum Verbinden einer anrufenden Partei (A) und einer empfangenden Partei (B) für Datenübertragungsaustausch zwischen ihnen verwendet werden, in welchem System sowohl der anrufenden Partei (A) als auch der empfangenden Partei (B) bestimmte Identitätscodes zugeteilt worden sind, wobei der Identitätscode der anrufenden Partei (A) in der ersten Einheit bei Herstellung einer Datenübertragung mit der empfangenden Partei (B) registriert wird und der Identitätscode über die Schaltmittel zur empfangenden Partei (B) übertragen wird, die den Identitätscode der anrufenden Partei (A) registriert, bevor das Datenübertragungssystem das Rufsignal zur empfangenden Partei (B) überträgt, wobei die empfangende Partei (B) den Identitätscode der anrufenden Partei (A) registriert, der mit einem bei der empfangenden Partei (B) vorgesehenen Speicher genehmigter Identitätscodes für anrufende Parteien (A) verglichen wird, woraufhin im Falle, wo die anrufende Partei (A) im Speicher aufgeführt ist, die anrufende Partei mit der empfangenden Partei (B) verbunden wird, und in dem Falle, wo die anrufende Partei (A) nicht im Speicher aufgeführt ist, der anrufenden Partei die Verbindung verweigert wird oder dieselbe zu einer speziell angeordneten antwortenden Station geschaltet wird, dadurch gekennzeichnet, daß die empfangende Partei (B) mit einem Zugangsschutz versehen ist, der erfordert, daß die anrufende Partei (A) einen Zugangscode sendet, bevor die anrufende Partei (A) mit einer Nebenstelle verbunden wird, und daß in den Fällen, in denen ein falscher Adreßcode gegeben wird oder ein Adreßcode für Verbindung mit Diensten/Ausrüstung gegeben wird, für den die anrufende Partei (A) nicht berechtigt ist, weitere Verbindung der anrufenden Partei (A) verweigert wird und die Identität der anrufenden Partei (A) registriert wird.

2. Verfahren nach Anspruch 1, dadurch gekennzeichnet, daß die Identitätscodes Information über den geographischen Ursprung enthalten.

3. Verfahren einem der vorangehenden Ansprüche, dadurch gekennzeichnet, daß die Einrichtung des Datenverkehrs zwischen der anrufenden Partei (A) und der empfangenden Partei (B) nur bewirkt wird, wenn die anrufende Partei (A) im Speicher der empfangenden Partei (B) registriert ist.

4. Verfahren nach einem der vorangehenden Ansprüche, dadurch gekennzeichnet, daß die anrufende Partei (A) zu einer antwortenden Station geleitet wird, die vorher als Funktion des Identitätscodes der anrufenden Partei (A) ausgewählt ist.

5. Verfahren nach einem der Ansprüche 1 bis 3, dadurch gekennzeichnet, daß die anrufende Partei (A) mit einer antwortenden Station bei der empfangenden Partei (B) in Abhängigkeit vom geographischen Ursprung der anrufenden Partei (A) verbunden wird.

6. Verfahren nach einem der vorangehenden Ansprüche, dadurch gekennzeichnet, daß die anrufenden Parteien (A) kathegorisiert sind, wobei eine anrufende Partei, der eine höhere Priorität zugeteilt ist, Vorrang vor einer anrufenden Partei mit niedrigerer Priorität erhält.

7. Anordnung in einem Datenübertragungssystem, das anrufende Ausrüstungen (A), die mit ersten Einheiten verbunden sind, und empfangende Ausrüstungen (B), die mit zweiten Einheiten verbunden sind, wobei die empfangenden Ausrüstungen (B), die zu einem Datendienstanbieter gehören, wenigstens eine antwortende Ausrüstung aufweisen, und Schaltmittel zwischen den ersten und zweiten Einheiten aufweist, welche Schaltmittel zum Verbinden einer anrufenden Ausrüstung (A) mit einer empfangenden Ausrüstung (B) für Datenübertragung zwischen denselben verwendet werden und wobei sowohl der anrufenden Ausrüstung (A) als auch der empfangenden Ausrüstung (B) eindeutige Identitätscodes zugeordnet worden sind und der Identitätscode der anrufenden Ausrüstung (A) bei Herstellung einer Datenübertragung mit der empfangenden Partei (B) in der ersten Einheit registriert wird und der Identitätscode über die Schaltmittel zur empfangenden Ausrüstung (B) übertragen wird, die dazu ausgebildet ist, den Identitätscode der anrufenden Ausrüstung (A) zu registrieren, bevor die Datenübertragungsausrüstung das Rufsignal zur empfangenden Ausrüstung (B) überträgt, wobei die empfangende Ausrüstung (B) dazu ausgebildet ist, den Identitätscode der anrufenden Ausrüstung (A) zu registrieren, der mit einem in der empfangenden Station (B) angeordneten Speicher von genehmigten Identitätscodes für anrufende Ausrüstungen (A) verglichen wird, wodurch die anrufende Ausrüstung (A), die im Speicher aufgeführt ist, mit der empfangenden Ausrüstung (B) für Datenübertragung verbunden wird, und wobei der anrufenden Ausrüstung (A), die nicht im Speicher der empfangenden Ausrüstung (B) aufgeführt ist, die Verbindung verweigert wird oder dieselbe mit einer speziell angeordneten antwortenden Station verbunden wird, dadurch gekennzeichnet, daß die empfangende Partei (B) mit einem Zugangs schutzmittel versehen ist zum Empfangen eines Zugangscodes von der anrufenden Partei (A), bevor die anrufende Partei (A) mit einer Nebenstelle verbunden wird, und um in den Fällen, in denen ein falscher Zugangscode gegeben wird oder ein Zugangscode für Verbindung mit Diensten/Ausrüstungen gegeben wird, für die die anrufende Partei (A) nicht berechtigt ist, weitere Verbindung der anrufenden Partei (A) zu verweigern und die Identität der anrufenden Partei (A) zu registrieren.

8. Anordnung nach Anspruch 7, dadurch gekennzeichnet, daß die Identitätscodes Information über den geographischen Ursprung enthalten.

9. Anordnung nach einem der Ansprüche 7 oder 8, dadurch gekennzeichnet, daß die Anordnung so ausgebildet ist, daß das Einrichten von Datenverkehr zwischen einer anrufenden Ausrüstung (A) und einer empfangenden Ausrüstung (B) nur durchgeführt wird, wenn die anrufende Ausrüstung (A) im Speicher der empfangenden Ausrüstung (B) registriert ist.

10. Anordnung nach einem der Ansprüche 7 bis 8, dadurch gekennzeichnet, daß die anrufende Ausrüstung (A) dazu ausgebildet ist, zu einer antwortenden Station geleitet zu werden, die im Voraus als Funktion des Identitätscodes der anrufenden Ausrüstung (A) ausgewählt ist.

11. Anordnung nach einem der Ansprüche 7 bis 9, dadurch gekennzeichnet, daß die anrufende Ausrüstung (A) mit einer antwortenden Station bei der empfangenden Ausrüstung (B) in Abhängigkeit vom geographischen Ursprung der anrufenden Ausrüstung (A) verbunden wird.

12. Anordnung nach einem der Ansprüche 7 bis 11, dadurch gekennzeichnet, daß die anrufenden Ausrüstungen (A) kathegorisiert sind, wobei eine anrufende Ausrüstung, der die höhere Priorität zugeteilt ist, dazu ausgebildet ist, Vorrang vor einer anrufenden Ausrüstung (A) mit niedrigerer Priorität zu erhalten.

## Revendications

1. Méthode dans un système de communication; comprenant des entités d'appel (A) connectées à une première unité et des entités de réception (B) connectées à une deuxième unité, l'entité de réception (B) étant un fournisseur de services de données ayant au moins une station de réponse, et des moyens de commutation entre lesdites première et deuxième unités, lesdits moyens de commutation étant utilisés pour l'interconnexion d'une entité d'appel (A) et d'une entité de réception (B) pour échange de communication entre elles, et dans ce système on a attribué à l'entité d'appel (A) et à l'entité de réception (B) des codes d'identité spécifiques, le code d'identité de l'entité d'appel (A) étant enregistré dans la première unité, lors de l'établissement de communication avec l'entité de réception (B), et le code d'identité est transféré via les moyens de commutation à l'entité de réception (B) qui enregistre le code d'identité de l'entité d'appel (A) avant que le système de communication transfère le signal d'appel à l'entité de réception (B),de sorte que l'entité de réception (B) enregistre le code d'identité de l'entité d'appel (A), qui est comparé à un registre, établi à l'entité de réception (B), des codes d'identité approuvés pour les entités d'appel (A), après quoi, dans le cas où l'entité d'appel (A) figure dans le registre, l'entité d'appel est interconnectée avec l'entité de réception (B) et, dans le cas où l'entité d'appel (A) ne figure pas dans le registre, la connexion de l'entité d'appel est refusée ou bien cette entité est commutée à une station de réponse spécialement prévue, caractérisée en ce que l'entité de réception (B) possède une protection d'accès exigeant que l'entité d'appel (A) transmette un code d'accès avant connexion de l'entité d'appel (A) à une extension, et en ce que, dans les cas où un code d'accès incorrect est donné, ou un code d'accès est donné pour une connexion à des services/équipements pour lesquels l'entité d'appel (A) n'a pas d'autorisation, la poursuite de la connexion de l'entité d'appel (A) est refusée et l'identité de l'entité d'appel (A) est enregistrée.

2. Méthode suivant la revendication 1, caractérisée en ce que les codes d'identité contiennent des informations sur l'origine géographique.

3. Méthode suivant une quelconque des revendications précédentes, caractérisée en ce que l'établissement d'un trafic de données entre l'entité d'appel (A) et l'entité de réception (B) est seulement effectué si l'entité d'appel (A) est enregistrée dans le registre de l'entité de réception (B).

4. Méthode suivant une quelconque des revendications précédentes, caractérisée en ce que l'entité d'appel (A) est acheminée vers une station de réponse choisie à l'avance,en fonction du code d'identité de l'entité d'appel (A).

5. Méthode suivant une quelconque des revendications 1 à 3, caractérisée en ce que l'entité d'appel (A) est interconnectée avec une station de réponse, à l'endroit de l'entité de réception (B),en fonction de l'origine géographique de l'entité d'appel (A).

6. Méthode suivant une quelconque des revendications précédentes, caractérisée en ce que les entités d'appel (A) sont classées en catégories, de sorte qu'une entité d'appel ayant reçu la priorité la plus élevée passe avant une entité d'appel de priorité inférieure.

7. Dispositif dans un système de communication comprenant des équipements d'appel (A), connectés à des premières unités, et des équipements de réception (B) connectés à des deuxièmes unités, les équipements de réception (B) appartenant à un fournisseur de services de données possédant au moins un équipement de réponse, et des moyens de commutation entre premières et deuxièmes unités, lesdits moyens de commutation étant utilisés pour interconnecter un équipement d'appel (A) et un équipement de réception (B) pour une transmission de communication entre ces équipements, et à la fois l'équipement d'appel (A) et l'équipement de réception (B) ont reçu des codes d'identité spécifiques, le code d'identité de l'équipement d'appel (A) est enregistré dans la première unité, lors de l'établissement de communication avec l'entité de réception (B), et le code d'identité est transféré via les moyens de commutation à l'équipement de réception (B) qui est prévu pour enregistrer le code d'identité de l'équipement d'appel (A) avant que l'équipement de communication transfère le signal d'appel à l'équipement de réception (B), dans lequel l'équipement de réception (B) est prévu pour enregistrer le code d'identité de l'équipement d'appel (A) qui est comparé au registre établi dans l'équipement de réception (B) des codes d'identité approuvés pour les équipements d'appel (A), de sorte que l'équipement d'appel (A) qui figure dans le registre est interconnecté avec l'équipement de réception (B) pour transmission de communication, et l'équipement d'appel (A) qui ne figure pas dans le registre de l'équipement de réception (B) rencontre un refus de connexion ou bien il est interconnecté à une station de réponse spécialement prévue, caractérisé en-ce que l'entité de réception (B) est pourvue de moyens de protection d'accès pour recevoir un code d'accès venant de l'entité d'appel (A) avant la connexion de l'entité d'appel (A) à une extension et, dans les cas où un code d'accès incorrect est donné, ou bien un code d'accès est donné pour connexion à des services/équipements pour lesquels l'entité d'appel (A) n'est pas autorisée, pour refuser la poursuite de la connexion de l'entité d'appel (A) et enregistrer l'identité de l'entité d'appel (A).

8. Dispositif suivant la revendication 7, caractérisé en ce que les codes d'identité contiennent des informations sur l'origine géographique.

9. Dispositif suivant une quelconque des revendications 7 ou 8, caractérisé en ce que le dispositif est prévu de sorte que l'établissement d'un trafic de données entre un équipement d'appel (A) et un équipement de réception (B) est seulement effectué si l'équipement d'appel (A) est enregistré dans le registre de l'équipement de réception (B).

10. Dispositif suivant une quelconque des revendications 7 et 8, caractérisé en ce que l'équipement d'appel (A) est prévu pour être acheminé vers une station de réponse choisie à l'avance en fonction du code d'identité de l'équipement d'appel (A).

11. Dispositif suivant une quelconque des revendications 7 à 9, caractérisé en ce que l'équipement d'appel (A) est interconnecté à une station de..réponse, à l'endroit de l'équipement de réception (B), en fonction de l'origine géographique de l'équipement d'appel (A).

12. Dispositif suivant une quelconque des revendications 7 à 11, caractérisé en ce que les équipements d'appel (A) sont classés en catégories, de sorte qu'un équipement d'appel auquel est affectée la priorité la plus élevée peut passer avant un équipement d'appel (A) de priorité inférieure.
